# EUROPÄISCHE PATENTSCHRIFT

(11) **EP 1 809 465 B1**
(45) Veröffentlichungstag und Bekanntmachung des Hinweises auf die Patenterteilung: **06.10.2010**
(21) Anmeldenummer: 05798674.7
(22) Anmeldetag: 08.11.2005
(51) Int. Cl.: B29C 45/16, B29C 45/14

(54) **VERFAHREN ZUM HERSTELLEN EINES VERBUNDTEILS DURCH SPRITZGIESSEN ODER SPRITZPRÄGEN ODER HINTERPRESSEN VON KUNSTSTOFFMATERIAL**
METHOD FOR PRODUCING A COMPOSITE PART BY THE INJECTION MOULDING, INJECTION COMPRESSION MOULDING OR IN-MOULD INJECTION OF A PLASTIC MATERIAL
PROCÉDÉ POUR FABRIQUER UNE PIÈCE COMPOSITE PAR MOULAGE PAR INJECTION OU PAR INJECTION-COMPRESSION DE MATIÈRE PLASTIQUE

(30) Priorität: 08.11.2004 EP 04405684
(43) Veröffentlichungstag der Anmeldung: 25.07.2007
(60) Teilanmeldung: 07010547.3
(73) Patentinhaber: Georg Kaufmann Formenbau AG, 5453 Busslingen (CH); PEGUFORM GMBH, 79268 Bötzingen (DE)
(72) Erfinder: SUTER, Hans, CH-5445 Eggenwil (CH); KÜMPER, Manfred, 93358 St. Johann (DE)
(74) Vertreter: EGLI-EUROPEAN PATENT ATTORNEYS
(86) Internationale Anmeldenummer: PCT/CH2005/000659
(87) Internationale Veröffentlichungsnummer: WO 2006/047905

(56) Entgegenhaltungen:
- EP-A- 0 516 151
- EP-A- 1 433 584
- US-A- 4 115 506
- US-A- 5 153 052
- US-B1- 6 202 276

## Beschreibung

Die Erfindung bezieht sich auf ein Verfahren zum Herstellen eines Verbundteils aus einem ersten Formteil und einem zweiten Formteil durch Spritzgiessen oder Spritzprägen oder Hinterpressen von Kunststoffmaterial.

Viele Gegenstände werden heute aus oder unter Verwendung von Kunststoffen hergestellt, zumal Kunststoffe viele Vorteile bieten. Kunststoffe sind organische, hochmolekulare Werkstoffe, die in einer grossen Anzahl von Varianten existieren und überwiegend synthetisch hergestellt werden können, wobei als Ausgangssubstanzen einer Synthese eine Vielzahl von chemischen Verbindungen mit unterschiedlichen Materialeigenschaften zur Verfügung steht. Dementsprechend können Werkstoffe aus Kunststoff in grossen Mengen und mit einer grossen Variation von Materialeigenschaften (mechanische, chemische, elektrische Eigenschaften etc.) produziert werden, beispielsweise in Form von Thermoplasten, Duroplasten, Elastomeren, Kunststoffschäumen, elektrisch leitenden Kunststoffen, Werkstoffen mit eingebetteten Kunststoffen zur mechanischen Verstärkung (beispielsweise faserverstärkte Werkstoffe), etc.

Ungeformte Ausgangsprodukte (Formmassen) aus Kunststoffen können mit einer Reihe von Standardverfahren mit relativ wenig Aufwand zu geformten Teilen (Formteile, Halbzeuge) verarbeitet werden, beispielsweise durch Spritzgiessen oder Spritzprägen von Kunststoffmaterial mit geeignet geformten Formwerkzeugen oder durch Hinterpressen von Kunststoffmaterial (in diesem Zusammenhang zu verstehen als "Pressen eines Kunststoffmaterials hinter eine vorgegebene Struktur aus einem Werkstoff") mit einem geeignet geformten Formwerkzeug.

Mit derartigen Techniken können Erzeugnisse aus Kunststoff in grossen Stückzahlen präzise und kostengünstig in nahezu beliebigen Formen und mit reproduzierbaren Materialeigenschaften hergestellt werden.

Durch eine geeignete Wahl der zu verarbeitenden Kunststoffe können die Materialeigenschaften der jeweiligen Formteile im Hinblick auf spezifische Anwendungen optimiert werden.

Häufig sollen Formteile gleich mehrere verschiedene Optimierungskriterien erfüllen, beispielsweise im Hinblick auf die mechanische Festigkeit und die elastischen Eigenschaften, die elektrische Leitfähigkeit, die optischen Eigenschaften, die Beschaffenheit der Oberfläche im Hinblick auf Reibung oder einen optischen Eindruck, die Beständigkeit gegenüber bestimmten Chemikalien, die thermischen Eigenschaften etc. Mehrere derart unterschiedliche Anforderungen können meist nicht zugleich von einem einzigen Werkstoff optimal erfüllt werden.

Um Formteile schaffen zu können, die vielfältigen technischen Anforderungen genügen, ist die Fachwelt daher bestrebt, verschiedene Werkstoffe (beispielsweise verschiedene Kunststoffe oder einen Kunststoff mit anderen Materialien) miteinander zu kombinieren und in Kombination miteinander zu einem Formteil zu verarbeiten.

Aus WO 99/47328 sind beispielsweise verschiedene Verfahren und entsprechende Vorrichtungen zum Hinterspritzen oder Hinterpressen von Kunststoff hinter Dekormaterialien (beispielsweise Teppiche, Textilien, Folien) bekannt: Nach diesen Verfahren werden jeweils eine flächige Struktur aus einem Dekormaterial und einem Kunststoff zu einem Formteil verarbeitet, indem in einem Formhohlraum eines Formwerkzeuges eine formbare (nicht ausgehärtete) Masse aus einem Kunststoff auf eine Seite der jeweiligen Struktur gespritzt und geformt wird (in einem Formhohlraum mit ruhenden Formhohlraumwänden) bzw. gepresst und geformt wird (in einem Formhohlraum, dessen Formhohlraumwände bewegbar sind, um ein Pressen des Kunststoffs zu ermöglichen). Dabei verbinden sich das Dekormaterial und der Kunststoff beim Aushärten des Kunststoffs an einer gemeinsamen Grenzfläche und bilden ein Formteil, dessen Form durch die Form des jeweiligen Formhohlraums bestimmt wird. Ein Teil der Oberfläche eines derartigen Formteils wird dabei von einer Seite des Dekormaterials gebildet, während der aus dem Kunststoff gebildete Teil des Formteils als Träger für das Dekormaterial dient und für die mechanische Stabilität des Formteils sorgt.

Um komplexe Strukturen aus Kunststoff oder unter Verwendung von Kunststoff zu bilden, kann versucht werden, verschiedene Formteile mit Hilfe von Kunststoff bzw. Kunststoffen zu einem Verbundteil zu verbinden, wobei das Verbundteil gegebenenfalls eine vorgegebene Form haben soll. Eine Realisierung eines derartigen, aus verschiedenen Formteilen zu bildenden Verbundteils kann allerdings problematisch sein. Zumindest einer der jeweiligen Formteile könnte beispielsweise in bestimmten Bereichen seiner Oberfläche einen Werkstoff aufweisen, der beim Spritzgiessen oder Spritzprägen oder Hinterpressen eines Kunststoffs keine chemische und/oder physikalische Verbindung eingeht und dadurch keine mechanisch belastbare Verbindung mit diesem Kunststoff aufweist. Dies schränkt die Möglichkeiten ein, ein Formteil mit einem anderen Formteil mittels Spritzgiessen oder Spritzprägen oder Hinterpressen von Kunststoffmaterial zu einem Verbundkörper zu verbinden.

Aus US 4115506 ist ein Verfahren zur Herstellung eines Stahlkanten aufweisenden Skis mittels Spritzgiessen bekannt, welcher Ski als Verbundteil aus einer ersten (oberen), durch Spritzgiessen hergestellten Platte, aus einer zweiten (unteren), ebenfalls durch Spritzgiessen hergestellten Platte und zwei vorgefertigten Stahlkanten zur Verstärkung der unteren Kanten des Skis ausgebildet ist. Zur Herstellung dieses Verbundteils werden die folgenden Schritte durchgeführt: (a) Herstellen der ersten Platte in Form eines ersten Formteils aus einem ersten Kunststoff durch Spritzgiessen derart, dass das erste Formteil an einer Seite mindestens eine Erhebung aufweist, (b) Anordnen der jeweiligen Stahlkante an dem ersten Formteil derart, dass sich die jeweilige Erhebung an einem Rand der Stahlkante befindet, und (c) Aufbringen einer Schicht aus einem zweiten Kunststoff auf der jeweiligen Stahlkante auf einer vom ersten Formteil abgewandten Seite durch Spritzgiessen des zweiten Kunststoffs derart, dass sowohl eine Oberfläche der Erhebung als auch die jeweilige. Stahlkante mindestens teilweise von der Schicht bedeckt wird und der erste Kunststoff und der zweite Kunststoff im Bereich der Erhebung eine das erste Formteil und die jeweilige Stahlkante zusammenhaltende Verbindung eingehen, wobei die aufgebrachte Schicht aus dem zweiten Kunststoff die untere Platte des Skis bildet. Bei diesem Verfahren hat das erste Formteil einen Oberflächenbereich, dessen Form in etwa der Form der Stahlkanten entspricht, sodass die Stahlkanten vor dem Aufbringen der Schicht aus dem zweiten Kunststoff mit dem ersten Formteil in Kontakt gebracht werden können.

Hier soll die Erfindung Abhilfe schaffen. Der Erfindung liegt die Aufgabe zugrunde, ein Verfahren bzw. ein System zum Herstellen eines Verbundteils aus einem ersten Formteil und einem zweiten Formteil durch Spritzgiessen oder Spritzprägen oder Hinterpressen von Kunststoffmaterial zu schaffen, wobei der Werkstoff bzw. die Werkstoffe eines der Formteile weitgehend unabhängig von dem Werkstoff bzw. den Werkstoffen des jeweils anderen Formteils wählbar sein soll. Insbesondere sollen die beiden Formteile selbst dann mittels des Kunststoffs miteinander verbindbar sein, wenn der Kunststoff an einer Grenzfläche zu einem der Formteile keine belastbare Verbindung mit diesem Formteil eingehen sollte.

Diese Aufgabe wird gelöst durch ein Verfahren mit den Merkmalen des Anspruchs 1.

Gemäss der Erfindung sind zum Herstellen eines Verbundteils aus einem ersten Formteil und einem zweiten Formteil durch Spritzgiessen oder Spritzprägen oder Hinterpressen von Kunststoffmaterial die folgenden Schritte (a) bis (c) vorgesehen:
(a) Herstellen des ersten Formteils aus einem ersten Kunststoff durch Spritzgiessen oder Spritzprägen oder Hinterpressen des ersten Kunststoffs derart, dass das erste Formteil an einer Seite mindestens eine Erhebung aufweist,
(b) Anordnen des zweiten Formteils an dem ersten Formteil derart, dass sich die jeweilige Erhebung an einem Rand des zweiten Formteils befindet, wobei das zweite Formteil eine Struktur aus einem flexiblen Material ist und aus Textilien und/oder einem Gewebe und/oder einem Geflecht und/oder einer Folie und/oder einem Teppichstoff gebildet ist, und
(c) Aufbringen einer Schicht aus einem zweiten Kunststoff auf dem zweiten Formteil auf einer vom ersten Formteil abgewandten Seite durch Spritzgiessen oder Spritzprägen oder Hinterpressen des zweiten Kunststoffs derart, dass sowohl eine Oberfläche der Erhebung als auch das zweite Formteil mindestens teilweise von der Schicht bedeckt wird und der erste Kunststoff und der zweite Kunststoff im Bereich der Erhebung eine die beiden Formteile zusammenhaltende Verbindung eingehen.

Zur Herstellung des ersten Formteils gemäss Schritt (a) und zum Aufbringen der Schicht gemäss Schritt (c) können jeweils Formwerkzeuge verwendet werden, die zum Spritzgiessen oder Spritzprägen oder Hinterpressen von Kunststoff geeignet sind. Derartige Formwerkzeuge können demnach nach bekannten Prinzipien konstruiert werden. Gemäss Schritt (b) wird sichergestellt, dass die beiden Formteile relativ zueinander geeignet positioniert sind, damit Schritt (c) durchführbar ist. Schritt (b) kann manuell oder automatisch ausgeführt werden.

Wesentlich für die Erfindung ist, dass das erste Formteil beim Spritzgiessen oder Spritzprägen oder Hinterpressen des ersten Kunststoffs derart geformt wird, dass es an einer Seite mindestens eine Erhebung aufweist, d.h. einen Bereich der Oberfläche, welcher angrenzende Bereiche der Oberfläche nach aussen überragt. Das erste Formteil und das zweite Formteil werden dadurch zu einem Verbundteil verbunden, dass die aus dem zweiten Kunststoff gefertigte Schicht gemäss Schritt (c) einerseits mit der Erhebung verbunden ist und andererseits das zweite Formteil zumindest teilweise auf der vom ersten Formteil abgewandten Seite bedeckt. Die Verbindung zwischen der Schicht und der Erhebung an der Oberfläche des ersten Formteils bewirkt, dass das zweite Formteil zwischen der Schicht und dem ersten Formteil über die Verbindung mit der Erhebung zumindest mechanisch gehalten wird. Auf diese Weise ist sichergestellt, dass das erste Formteil und das zweite Formteil selbst dann zusammengehalten werden, wenn der zweite Kunststoff an der Oberfläche des zweiten Formteils nicht fest haftet bzw. wenn der zweite Kunststoff nicht chemisch oder physikalisch an der Oberfläche des zweiten Formteils gebunden ist.

Damit die Erhebung beim Aufbringen der Schicht beim Spritzgiessen oder Spritzprägen oder Hinterpressen gemäss Schritt (c) für den zweiten Kunststoff zugänglich ist, sollte das zweite Formteil gemäss Schritt (b) an dem ersten Formteil derart angeordnet sein, dass sich die jeweilige Erhebung an einem Rand des zweiten Formteils befindet. Ein derartiger Rand kann beispielsweise als Rand eines durch das zweite Formteil durchgehenden Loches ausgebildet sein. Er kann auch an der Peripherie des zweiten Formteils ausgebildet sein, beispielsweise an einer Aussparung bzw. Einbuchtung an der Oberfläche des zweiten Formteils.

Unabhängig davon, wie der Werkstoff des zweiten Formteils gewählt wird, ist es demnach möglich, das erste Formteil und das zweite Formteil zu einem Verbundteil zusammenzuhalten. Die Erfindung erlaubt es deshalb, den Werkstoff des zweiten Formteils weitgehend unabhängig von dem Werkstoff des ersten Formteils bzw. dem zweiten Kunststoff zu wählen.

Die Verbindung zwischen dem ersten Formteil und dem zweiten Formteil kann auf verschiedene Arten realisiert werden.

Der zweite Kunststoff kann beispielsweise so gewählt werden, dass die Verbindung zwischen dem ersten Formteil und dem zweiten Formteil über chemische Bindungen zwischen dem ersten Kunststoff und dem zweiten Kunststoff realisiert wird. Der erste Kunststoff und der zweite Kunststoff können beispielsweise identisch sein oder, falls die beiden Kunststoffe nicht identisch sind, nahe beieinander liegende Schmelzpunkte haben. In diesen Fällen kann die Schicht bei einer Temperatur aufgebracht werden, bei der der erste Kunststoff mindestens in einem Teilbereich der Erhebung erweicht oder flüssig wird. Unter diesen Voraussetzungen können sich der erste Kunststoff und der zweite Kunststoff an einer Grenzfläche zwischen der Erhebung und der Schicht vermischen und über chemische und/oder physikalische Bindungen verbunden werden. Diese Art der Verbindung ist besonders stabil und verfahrenstechnisch besonders einfach zu realisieren.

In einer weiteren Ausführungsform des erfindungsgemässen Verfahrens kann die jeweilige Erhebung im Schritt (a) so ausgebildet werden, dass sie mindestens eine Hinterschneidung aufweist und die Schicht mit der Erhebung im Bereich der Hinterschneidung in Verbindung steht. In diesem Fall sind die Schicht und das zweite Formteil auf jeden Fall über eine mechanische Verbindung mit der Erhebung und folglich mit dem ersten Formteil verbunden. Diese Variante hat den Vorteil, dass das erste Formteil und das zweite Formteil selbst dann zu einem Verbundteil verbindbar sind, wenn der zweite Kunststoff nicht an dem ersten Formteil haftet bzw. wenn der zweite Kunststoff nicht chemisch und/oder physikalisch an den Werkstoff des ersten Formteils gebunden werden kann. Diese Variante ist beispielsweise auch anwendbar, wenn der erste Kunststoff und der zweite Kunststoff sich hinsichtlich ihrer Schmelzpunkte stark unterscheiden (beispielsweise wenn der erste Kunststoff einen wesentlich höheren Schmelzpunkt als der zweite Kunststoff hat, so dass der erste Kunststoff beim Aufbringen der Schicht aus dem zweiten Kunststoff nicht weich wird bzw. nicht anschmilzt).

Die an dem ersten Formteil ausgebildete Erhebung und der an dem zweiten Formteil ausgebildete Rand, der gemäss Schritt (b) an der jeweiligen Erhebung platziert wird, können nach verschiedenen Kriterien optimiert und gegebenenfalls funktionell aufeinander abgestimmt werden.

Die Grösse der Oberfläche der Erhebung kann geeignet variiert werden, um die Stärke (d. h. die mechanische Belastbarkeit) der Verbindung zwischen der Erhebung und der aus dem zweiten Kunststoff gebildeten Schicht zu optimieren. Die Stärke dieser Verbindung ist in der Regel umso grösser, je grösser die Grenzfläche ist, an der der zweite Kunststoff in Kontakt mit der jeweiligen Erhebung steht. Der zweite Kunststoff muss dabei die jeweilige Erhebung nicht vollständig überdecken, die Erhebung kann die aus dem zweiten Kunststoff gebildete Schicht auch derart durchdringen, dass die jeweilige Erhebung lediglich im Bereich von Seitenflächen mit der Schicht in Kontakt steht und ein Oberteil der Erhebung die Schicht jeweils überragt.

Falls die Erhebung aus Platzgründen eine kleine Querschnittsfläche haben muss, dann kann die Stärke der Verbindung zwischen der Erhebung und der Schicht dadurch optimiert werden, dass die Höhe der Erhebung und die Dicke der Schicht entsprechend gross gewählt werden. In einer Variante des erfindungsgemässen Verfahrens ist deshalb vorgesehen, dass die jeweilige Erhebung derart dimensioniert wird, dass sie das zweite Formteil an dem jeweiligen Rand überragt. Die Höhe der Erhebung wird so gewählt, dass die Verbindung zwischen der in Schritt (c) aufgebrachten Schicht und der jeweiligen Erhebung eine vorgegebene Stärke erreicht.

Die Form der jeweiligen Erhebung unterliegt keinen prinzipiellen Einschränkungen und kann je nach Anwendung geeignet gewählt werden. Eine Erhebung kann eine runde oder eine eckige Querschnittsfläche aufweisen und beispielsweise als Stift oder Säule oder Zylinder oder Kegel oder Rippe ausgebildet sein.

In einer weiteren Variante des erfindungsgemässen Verfahrens ist vorgesehen, dass das zweite Formteil mindestens ein Loch oder eine Aussparung aufweist und das Loch bzw. die Aussparung den jeweiligen Rand bildet, wobei das zweite Formteil derart angeordnet wird, dass die Erhebung in das Loch bzw. die Aussparung ragt oder das Loch bzw. die Aussparung durchdringt. Diese Variante hat den Vorteil, dass die jeweilige Erhebung bei der Ausführung des Schritts (b) verwendet werden kann, um das zweite Formteil gegenüber dem ersten Formteil vor der Ausführung des Schritts (c) auf einfache Weise zu justieren: Jede Erhebung an der Oberfläche des ersten Formteils muss lediglich mit dem jeweils entsprechenden Loch bzw. der entsprechenden Aussparung im zweiten Formteil zur Deckung gebracht werden. Diese Variante hat einen besonderen Vorteil, wenn das erste Formteil mehrere Erhebungen und das zweite Formteil mehrere entsprechende Löcher bzw. Aussparungen aufweist: In diesem Fall ist durch die Positionen der Erhebungen und die Positionen der entsprechenden Löcher bzw. Aussparungen auch die im Schritt (b) zu realisierende Anordnung des zweiten Formteils bezüglich des ersten Formteils festgelegt.

Die vorstehend genannten Varianten haben weitere Vorteile bei Anwendungen, bei denen das zweite Formteil eine Struktur aus einem flexiblen Material ist, beispielsweise aus Textilien und/oder einem Gewebe und/oder einem Geflecht und/oder einer Folie und/oder einem Teppichstoff und/oder einem Dekormaterial. Die auf dem ersten Formteil ausgebildeten Erhebungen und die am zweiten Formteil ausgebildeten Löcher bzw. Aussparungen erlauben es, die flexible Struktur im Schritt (b) bezüglich der Erhebungen zu justieren und gegebenenfalls an den Erhebungen derart zu halten, dass die flexible Struktur zwischen den Erhebungen gespannt ist. In diesem Fall kann durch Hinterspritzen oder Hinterpressen des zweiten Kunststoffs gemäss Schritt (c) ein Verbundteil hergestellt werden, dessen Oberfläche in einem Teilbereich mit der flexiblen Struktur verkleidet ist. Die genannte Vorgehensweise, nämlich das Justieren der flexiblen Struktur an den Erhebungen und das Spannen der flexiblen Struktur zwischen den Erhebungen, hat bei der Herstellung derartiger Verbundkörper wesentliche Vorteile: Die Qualität der Oberflächen wird verbessert; die Verbundkörper lassen sich mit grösserer Genauigkeit und verbesserter Reproduzierbarkeit herstellen.

Im Folgenden werden Ausführungsbeispiele der Erfindung anhand verschiedener schematischer Zeichnungen erläutert. Es zeigen:
- Fig. 1:: Ein erstes Formwerkzeug zur Herstellung eines ers- ten Formteils aus einem ersten Kunststoff, welcher in einen Formhohlraum des Formwerkzeugs eingebracht wird, in einem Querschnitt;
- Fig. 2:: das Formwerkzeug gemäss Fig. 1, mit einem im Form- hohlraum angeordneten ersten Formteil, in einem Schnitt II-II gemäss Fig. 1;
- Fig. 3:: ein zweites Formwerkzeug mit einem Formhohlraum zur Aufnahme eines ersten Formteils, welches mit dem ersten Formwerkzeug gemäss Fig. 1 hergestellt ist, und zur Aufnahme eines zweiten Formteils und zur Herstellung eines Verbundteils aus dem ersten Form- teil und dem zweiten Formteil durch Auffüllen des Formhohlraums mit einem zweiten Kunststoff, in ei- nem Querschnitt;
- Fig. 4:: ein Teil des zweiten Formwerkzeugs gemäss Fig. 3 mit einer Anordnung des ersten Formteils und des zweiten Formteils in einer Draufsicht IV-IV gemäss Fig. 3;
- Fig. 5:: ein mit dem zweiten Formwerkzeug gemäss Fig. 3 her- gestelltes Verbundteil;
- Fig. 6:: ein erstes Formwerkzeug zur Herstellung eines ers- ten Formteils mittels Hinterspritzen oder Hinter- pressen eines ersten Kunststoffs hinter eine Struk- tur aus einem flexiblen Material in einem Formhohl- raum des Formwerkzeugs, in einem Querschnitt;
- Fig. 7:: ein Teil eines mit dem ersten Formwerkzeug gemäss Fig. 6 hergestellten ersten Formteils in einem Schnitt VII-VII gemäss Fig. 6;
- Fig. 8:: ein zweites Formwerkzeug mit einem Formhohlraum zur Aufnahme eines ersten Formteils, welches mit dem ersten Formwerkzeug gemäss Fig. 6 hergestellt ist, und zur Aufnahme eines zweiten Formteils in Form einer Struktur aus flexiblem Material und zur Her- stellung eines Verbundteils aus dem ersten Formteil und dem zweiten Formteil durch Auffüllen des Form- hohlraums mit einem zweiten Kunststoff, in einem Querschnitt;
- Fig. 9:: eine Anordnung des ersten Formteils und des zweiten Formteils gemäss Fig. 8, in einem Schnitt IX-IX ge- mäss Fig. 8;
- Fig. 10:: ein mit dem zweiten Formwerkzeug gemäss Fig. 8 her- gestelltes Verbundteil, in einem Querschnitt.

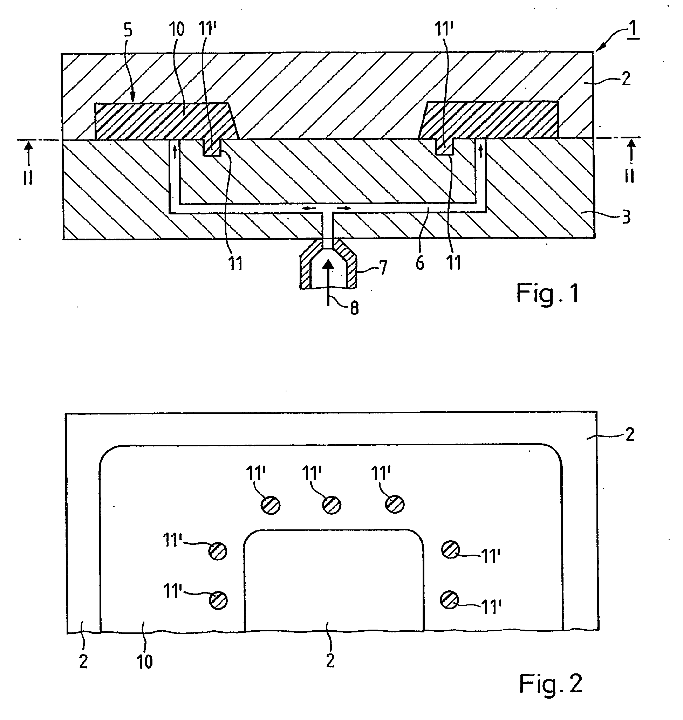

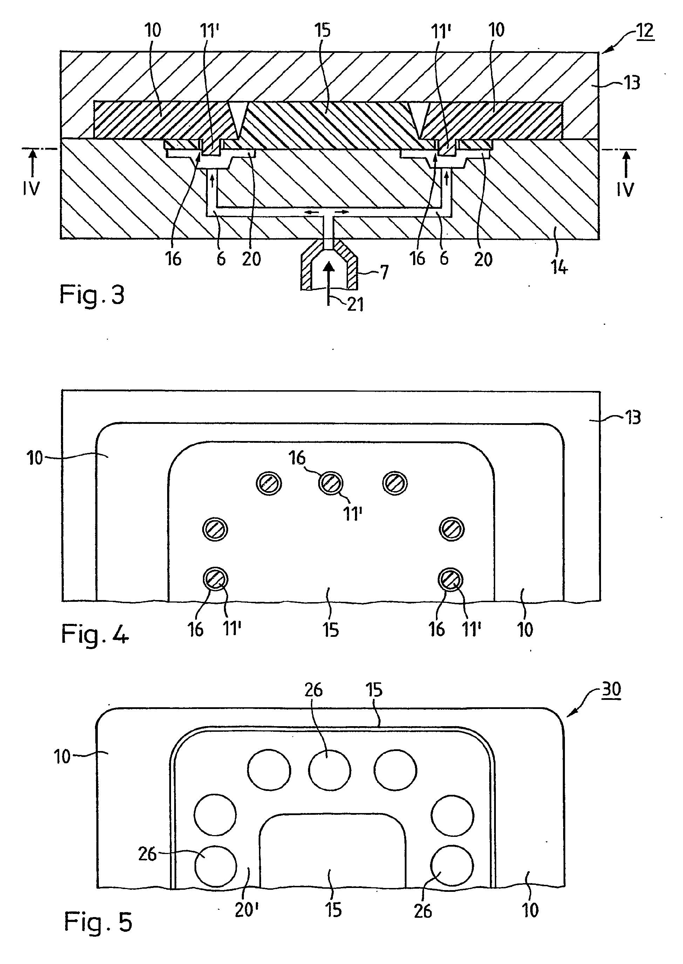

Die Figuren 1 - 5 stellen die Herstellung eines Verbundteils 30 aus einem ersten Formteil 10 und einem zweiten Formteil 15 dar. Die Figuren 3-5 zeigen eine Variante, die nicht gemäß der Erfindung ist.

In einem ersten Schritt wird das erste Formteil 10 aus einem ersten Kunststoff 8 mittels eines Formwerkzeugs 1 hergestellt (Fig. 1). Das Formwerkzeug 1 ist in einen ersten Teil 2 und einen zweiten Teil 3 geteilt, welche relativ zueinander bewegbar sind, um das Formwerkzeug 1 zu öffnen bzw. zu schliessen. Die Fig. 1 stellt das Formwerkzeug 1 im geschlossen Zustand dar. Im diesem Fall bilden der erste Teil 2 und der zweite Teil 3 die Wände eines Formhohlraums 5, dessen Form der äusseren Form des herzustellenden Formteils 10 entspricht.

Im vorliegenden Beispiel wird das Formwerkzeug 1 als Spritzgiesswerkzeug betrieben. Der erste Kunststoff 8 wird - in plastifizierter Form (Spritzgiessmasse) - unter hohem Druck aus einer Zuführung 7 über einen Kanal 6 in den Formhohlraum 5 des geschlossenen Formwerkzeugs 1 gespritzt, bis der Formhohlraum 5 vollständig gefüllt ist. Durch eine geeignete Kontrolle der Betriebsbedingungen wird erreicht, dass der erste Kunststoff 8 im Formhohlraum 5 in den festen Zustand übergeht. Anschliessend kann das Formwerkzeug 1 geöffnet und das fertige Formteil 10 entnommen werden.

Wie die Figuren 1 und 2 zeigen, weist der zweite Teil 3 des Formwerkzeugs 1 formhohlraumseitig mehrere Vertiefungen 11 auf, die jeweils die Form eines Zylinders aufweisen. Dementsprechend weist das Formteil 10 an einer Seite zylinderförmige Erhebungen 11' auf, die einen Abguss der Vertiefungen 11 darstellen und entsprechend geformt sind.

Gemäss Fig. 2 wird im vorliegenden Beispiel vorgesehen, dass das erste Formteil 10 flächig ausgebildet ist und die Form eines C aufweist. Ausserdem ist vorgesehen, dass die Erhebungen 11' entlang eines Randes des ersten Formteils angeordnet sind. Es sei darauf hingewiesen, dass die Erfindung auch auf anders geformte Formteile anwendbar ist.

Fig. 3 zeigt ein Formwerkzeug 12, welches in einen ersten Teil 13 und einen zweiten Teil 14 geteilt ist. Die Teile 13 und 14 sind relativ zueinander bewegbar, um das Formwerkzeug 12 zu öffnen bzw. zu schliessen. Die Fig. 3 stellt das Formwerkzeug 12 im geschlossen Zustand dar. Im diesem Fall bilden der erste Teil 13 und der zweite Teil 14 die Wände eines Formhohlraums 20.

Das Formwerkzeug 12 wird dazu verwendet, die Formteile 10 und 15 mit Hilfe eines zweiten Kunststoffs 21 zum Verbundteil 30 zu verbinden. Im vorliegenden Beispiel wird das Formwerkzeug 12 als Spritzgiesswerkzeug verwendet. Der zweite Kunststoff 21 kann (muss aber nicht) identisch mit dem ersten Kunststoff 8 sein.

Wie Fig. 3-5 zeigen, sind im vorliegenden Beispiel die Formteile 10 und 15 so geformt, dass sie - mosaikartig nebeneinander gelegt - eine zusammenhängende Fläche vollständig bedecken. Gemäss Fig. 4 weist das Formteil 15 eine Reihe von durchgehenden Löchern 16 auf. Die geometrische Anordnung der Löcher 16 stimmt mit der Anordnung der Erhebungen 11' an der Oberfläche des ersten Formteils 10 überein.

Wie die Figuren 3 und 4 zeigen, können das erste Formteil 10 und das zweite Formteil 15 passgenau zwischen den vom ersten Teil 13 gebildeten Wänden des Formhohlraums 20 eingefügt und somit relativ zum Formhohlraum justiert werden. Das zweite Formteil 15 wird so relativ zum ersten Formteil 10 angeordnet, dass die Erhebungen 11' in entsprechende Löcher 16 im zweiten Formteil 15 ragen. In dieser Lage ist das zweite Formteil 15 demnach derart am ersten Formteil 10 angeordnet, dass sich die jeweilige Erhebung 11' an einem Rand des zweiten Formteils 15 befindet.

Gemäss Fig. 3 ist jede Erhebung 11' derart dimensioniert, dass sie über den am jeweiligen Loch 16 ausgebildeten Rand des zweiten Formteils 15 hinausragt. Der Formhohlraum 20 ist durch das erste Formteil 10 und das zweite Formteil 15 nicht vollständig ausgefüllt. Auf der vom ersten Formteil 10 abgewandten Seite des zweiten Formteils 15 sind in der Umgebung der Erhebungen 11' und der Löcher 16 freie Nischen vorgesehen.

In diese freien Nischen des Formhohlraums 20 wird der zweite Kunststoff 21 - in plastifizierter Form (Spritzgiessmasse) - unter hohem Druck aus einer Zuführung 7 über einen Kanal 6 gespritzt, bis die Nischen vollständig gefüllt sind. Durch eine geeignete Kontrolle der Betriebsbedingungen wird erreicht, dass der zweite Kunststoff 21 im Formhohlraum 20 in den festen Zustand übergeht und eine Schicht 20' bildet, die einen Teil des zweiten Formteils 15 und die Erhebungen 11' überdeckt.

In diesem Zusammenhang wird angenommen, dass der zweite Kunststoff 21 mit dem ersten Kunststoff 8 im Bereich der Erhebungen 11' über chemische und/oder physikalische Bindungen verbunden ist. Auf diese Weise werden das erste Formteil 10 und das zweite Formteil 15 zum Verbundteil 30 verbunden. Anschliessend kann das Formwerkzeug 12 geöffnet und das fertige Verbundteil 30 entnommen werden.

Das Verbundteil 30 ist in Fig. 5 dargestellt. Die Schicht 20' bildet im vorliegenden Beispiel pilzförmige Überdeckungen 26 über den Erhebungen 11'.

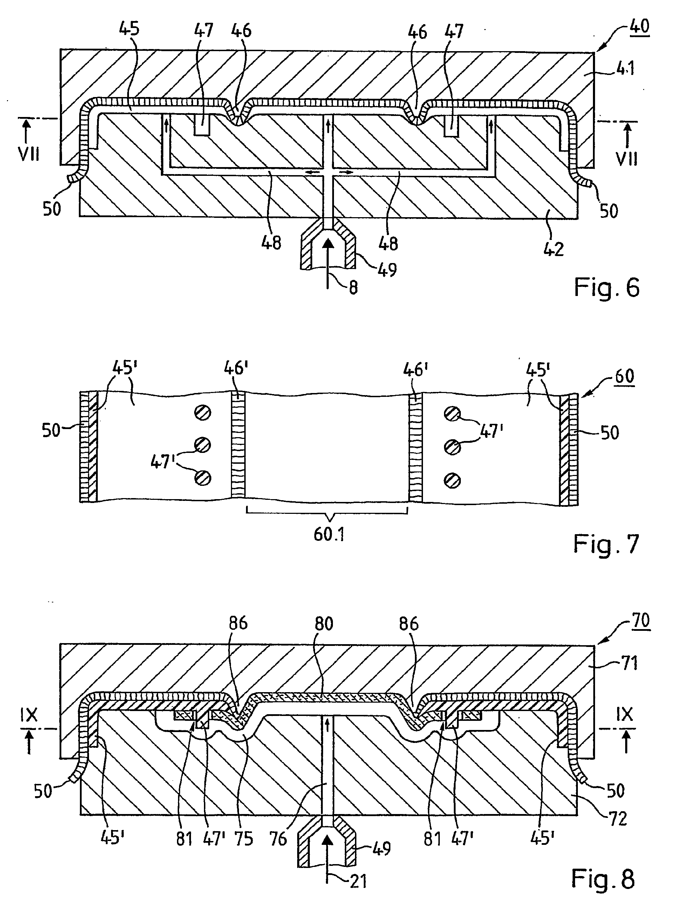

Die Figuren 6 - 10 stellen die Herstellung eines Verbundteils 90 aus einem ersten Formteil 60 und einem zweiten Formteil 80 gemäss einer Ausführungsform der Erfindung dar. Im vorliebenden Beispiel umfassen sowohl das Formteil 60 und das Formteil 80 jeweils eine Struktur aus einem flexiblen Material, beispielsweise aus Textilien und/oder einem Gewebe und/oder einem Geflecht und/oder einer Folie und/oder einem Teppichstoff und/oder einem Dekormaterial.

In einem ersten Schritt wird das erste Formteil 60 aus einer Struktur 50 aus einem flexiblen Material und einem ersten Kunststoff 8 mittels eines Formwerkzeugs 40 hergestellt (Fig. 6). Das Formwerkzeug 40 ist in einen ersten Teil 41 und einen zweiten Teil 42 geteilt, welche relativ zueinander bewegbar sind, um das Formwerkzeug 40 zu öffnen bzw. zu schliessen. Die Fig. 6 stellt das Formwerkzeug 40 im geschlossen Zustand dar. Im diesem Fall bilden der erste Teil 41 und der zweite Teil 42 die Wände eines Formhohlraums 45, dessen Form der äusseren Form des herzustellenden Formteils 60 entspricht.

Vor dem Schliessen des Formwerkzeugs 40 wurde die Struktur 50 an die formhohlraumseitige Wand des ersten Teils 41 gelegt. Wie in Fig. 6 dargelegt, füllt die Struktur 50 einen Teil des Formhohlraums 45 aus und ist derart angeordnet, dass sie der Kontur der formhohlraumseitigen Wand des ersten Teils 41 folgt. folgt.

Im vorliegenden Beispiel wird das Formwerkzeug 40 als Spritzgiesswerkzeug betrieben. Der erste Kunststoff 8 wird - in plastifizierter Form (Spritzgiessmasse) - unter hohem Druck aus einer Zuführung 49 über einen Kanal 48 in den Formhohlraum 45 des geschlossenen Formwerkzeugs 40 hinter die Struktur 50 gespritzt, bis der Formhohlraum 45 vollständig gefüllt ist. Durch eine geeignete Kontrolle der Betriebsbedingungen wird erreicht, dass der erste Kunststoff 8 im Formhohlraum 45 in den festen Zustand übergeht und eine Schicht 45' bildet, die mit der Struktur 50 verbunden ist. Anschliessend kann das Formwerkzeug 40 geöffnet und das fertige Formteil 60 entnommen werden.

In diesem Falle bildet die Struktur 50 eine Oberfläche des ersten Formteils 60, während die Schicht 45' als Träger für die Struktur 50 dient und für die mechanische Stabilität des Formteils 60 sorgt.

Wie die Figuren 6 und 7 zeigen, weist der erste Teil 41 des Formwerkzeugs 40 zwei Erhöhungen 46 an der formhohlraumseitigen Oberfläche des ersten Teils 41 des Formwerkzeugs 40 auf. Dementsprechend sind an der Oberfläche des ersten Formteils 60 Konturen 46' entstanden, die durch die Erhöhungen 46 geprägt sind.

Die Figuren 6 und 7 zeigen weiterhin, dass der zweite Teil 42 des Formwerkzeugs 40 formhohlraumseitig mehrere Vertiefungen 47 umfasst, die jeweils die Form eines Zylinders haben. Dementsprechend weist das Formteil 60 an einer Seite zylinderförmige Erhebungen 47' auf, die einen Abguss der Vertiefungen 47 darstellen und entsprechend geformt sind.

In weiteren Verfahrensschritten soll aus dem Formteil 60 ein Verbundkörper 90 geschaffen werden, der in einem Bereich seiner Oberfläche eine Struktur aus einem flexiblen Material umfasst, die sich von der Struktur 50 unterscheidet. Eine Lösung für diese Problemstellung auf der Grundlage der Erfindung ist in den Fig. 7 - 10 skizziert.

Wie in den Fig. 7 und 8 angedeutet ist, wird zunächst ein Teilstück 60.1 des ersten Formteils 60, welches sich zwischen den Konturen 46' erstreckt und dessen Breite dem Abstand zwischen den Konturen 46' und dessen Längserstreckung einem Teil der Längserstreckung des Formteils 60 in der Längsrichtung der Konturen 46' entspricht, ausgestanzt, ausgeschnitten oder auf eine andere Weise entfernt.

Gemäss der Erfindung kann nun das zweite Formteil 80 anstelle des entfernten Teilstücks 60.1 an dem derart modifizierten ersten Formteil 60 angeordnet werden und durch Hinterspritzen oder Hinterpressen eines zweiten Kunststoffs mit dem Formteil 60 verbunden werden.

Zu diesem Zweck ist das Formwerkzeug 70 gemäss Fig. 8 vorgesehen.

Wie Fig. 8 zeigt, ist das Formwerkzeug 70 in einen ersten Teil 71 und einen zweiten Teil 72 geteilt. Die Teile 71 und 72 sind relativ zueinander bewegbar, um das Formwerkzeug 70 zu öffnen bzw. zu schliessen. Die Fig. 8 stellt das Formwerkzeug 70 im geschlossen Zustand dar. Im diesem Fall bilden der erste Teil 71 und der zweite Teil 72 die Wände eines Formhohlraums 75.

Nach Entfernen des Teilstücks 60.1 wird das erste Formteil 60 derart in den Formhohlraum 75 eingelegt, dass die Struktur 50 an der formhohlraumseitigen Wand des ersten Teils 71 anliegt und in Randbereichen durch Erhöhungen 86 gestützt wird. Die Schicht 45' und die Erhebungen 47' sind unter diesen Umständen vom Formhohlraum 75 aus zugänglich.

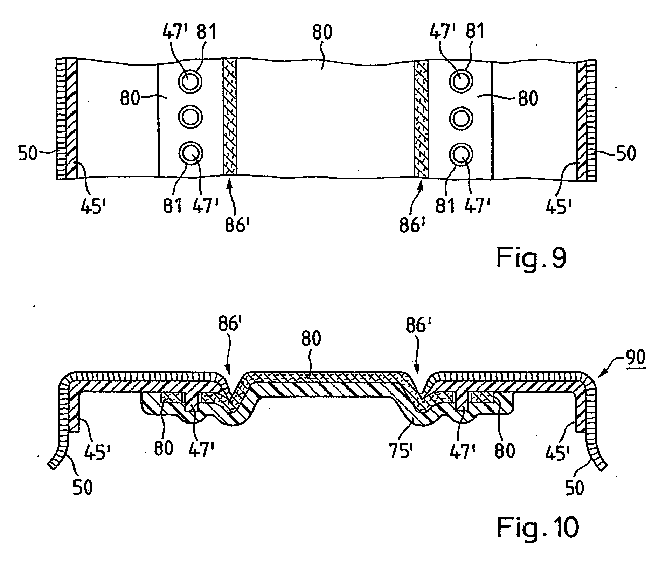

Als Formteil 80 ist eine Struktur aus einem flexiblen Material vorgesehen. Gemäss Fig. 8 und 9 weist das Formteil 80 eine Reihe von durchgehenden Löchern 81 auf, wobei die geometrische Anordnung der Löcher 81 mit der Anordnung der Erhebungen 47' an der Oberfläche des ersten Formteils 60 übereinstimmt.

Das zweite Formteil 80 wird relativ zum ersten Formteil 60 so angeordnet, dass die Erhebungen 47' in entsprechende Löcher 81 im zweiten Formteil 80 ragen. In dieser Lage ist das zweite Formteil 80 demnach gemäss der Definition der Erfindung derart am ersten Formteil 60 angeordnet, dass sich die jeweilige Erhebung 47' an einem Rand des zweiten Formteils 80 befindet.

Gemäss Fig. 8 ist jede Erhebung 47' derart dimensioniert, dass sie über den am jeweiligen Loch 81 ausgebildeten Rand des zweiten Formteils 80 hinausragt. Der Formhohlraum 75 ist durch das erste Formteil 60 und das zweite Formteil 80 nicht vollständig ausgefüllt. Auf der vom ersten Formteil 60 abgewandten Seite des zweiten Formteils 80 sind in der Umgebung der Erhebungen 47' und der Löcher 81 freie Nischen vorgesehen.

In freie Nischen des Formhohlraums 75 wird der zweite Kunststoff 21 - in plastifizierter Form (Spritzgiessmasse) - unter hohem Druck aus einer Zuführung 49 über einen Kanal 76 gespritzt, bis die Nischen vollständig gefüllt sind. Durch eine geeignete Kontrolle der Betriebsbedingungen wird erreicht, dass der zweite Kunststoff 21 im Formhohlraum 75 in den festen Zustand übergeht und eine Schicht 75' bildet, die eine Seite des zweiten Formteils 80 und die Erhebungen 47' überdeckt.

In diesem Zusammenhang wird angenommen, dass der zweite Kunststoff 21 mit dem ersten Kunststoff 8 im Bereich der Erhebungen 47' über chemische und/oder physikalische Bindungen verbunden ist. Auf diese Weise werden das erste Formteil 60 und das zweite Formteil 80 zum Verbundteil 90 verbunden. Anschliessend kann das Formwerkzeug 70 geöffnet und das fertige Verbundteil 90 entnommen werden.

Das nach dem erfindungsgemässen Verfahren hergestellte Verbundteil 90 ist in Fig. 10 dargestellt. 86' kennzeichnet eine Kontur, die durch eine der Erhöhungen 86 geprägt ist.

Die in den Figuren 1-8 dargestellten Ausführungsformen wurden ausschliesslich für den Spezialfall erläutert, dass der erste Kunststoff bzw. der zweite Kunststoff durch Spritzgiessen bzw. Hinterspritzen verarbeitet wird. Dies bedeutet nicht, dass die Erfindung auschliesslich auf der Grundlage dieser Techniken ausführbar ist. Die dargestellten Überlegungen lassen sich vielmehr analog auf andere Techniken wie Spritzprägen oder Hinterpressen übertragen.

Auf der Grundlage der Erfindung lassen sich eine Vielzahl von Materialien mittels Spritzgiessen oder Spritzprägen oder Hinterpressen von Kunststoffmaterial in Verbundteile einbetten, u.a. Metall und/oder Holz und/oder andere Materialien, die sich nicht über chemische und/oder physikalische Bindungen mit Kunststoffen verbinden lassen.

Als Kunststoffe kommen alle Materialien in Frage, die zum Spritzgiessen oder Spritzprägen oder Hinterpressen geeignet sind, beispielsweise Thermoplaste wie Polycarbonat (PC), ABS (Acrylnitril-Butadien-Styrol-Polymerisate) oder Polypropylen oder thermoplastische Kautschuke, aber auch duroplastische Reaktionsmassen wie z.B. Polyesterharze, Epoxidharze oder Polyurethane.

## Patentansprüche

1. Verfahren zum Herstellen eines Verbundteils (90) aus einem ersten Formteil (60) und einem zweiten Formteil (80) durch Spritzgiessen oder Spritzprägen oder Hinterpressen von Kunststoffmaterial (21) mit den folgenden Schritten:
(a) Herstellen des ersten Formteils (60) aus einem ersten Kunststoff (8) durch Spritzgiessen oder Spritzprägen oder Hinterpressen des ersten Kunststoffs (8) derart, dass das erste Formteil (60) an einer Seite mindestens eine Erhebung (47') aufweist,
(b) Anordnen des zweiten Formteils (80) an dem ersten Formteil (60) derart, dass sich die jeweilige Erhebung (47') an einem Rand (81) des zweiten Formteils (80) befindet, wobei das zweite Formteil (80) eine Struktur aus einem flexiblen Material ist und aus Textilien und/oder einem Gewebe und/oder einem Geflecht und/oder einer Folie und/oder einem Teppichstoff gebildet ist, und
(c) Aufbringen einer Schicht (75') aus einem zweiten Kunststoff (21) auf dem zweiten Formteil (80) auf einer vom ersten Formteil (60) abgewandten Seite durch Spritzgiessen oder Spritzprägen oder Hinterpressen des zweiten Kunststoffs (21) derart, dass sowohl eine Oberfläche der Erhebung (47') als auch das zweite Formteil (80) mindestens teilweise von der Schicht (75') bedeckt wird und der erste Kunststoff (8) und der zweite Kunststoff (21) im Bereich der Erhebung (47') eine die beiden Formteile (60, 80) zusammenhaltende Verbindung eingehen.

2. Verfahren nach Anspruch 1, wobei die Schicht (20', 75') bei einer Temperatur aufgebracht wird, bei der der erste Kunststoff (8) mindestens in einem Teilbereich der Erhebung (11', 47') erweicht oder flüssig wird.

3. Verfahren nach einem der Ansprüche 1 - 2, wobei die Erhebung (11', 47') mindestens eine Hinterschneidung aufweist und die Schicht (20', 75') mit der Erhebung (11', 47') im Bereich der Hinterschneidung in Verbindung steht.

4. Verfahren nach einem der Ansprüche 1 - 3, wobei die jeweilige Erhebung (11', 47') derart dimensioniert wird, dass sie das zweite Formteil (15, 80) an dem jeweiligen Rand (16, 81) überragt.

5. Verfahren nach einem der Ansprüche 1 - 4, wobei die Erhebung (11', 47') als Stift oder Säule oder Zylinder oder Kegel oder Rippe ausgebildet ist.

6. Verfahren nach einem der Ansprüche 1- 5, wobei das zweite Formteil (15, 80) mindestens ein Loch (16, 81) oder eine Aussparung aufweist und das Loch (16, 81) bzw. die Aussparung den jeweiligen Rand bildet, wobei das zweite Formteil (15, 80) derart angeordnet wird, dass die Erhebung (11', 47') in das Loch (16, 81) bzw. die Aussparung ragt oder das Loch bzw. die Aussparung durchdringt.

7. Verfahren nach einem der Ansprüche 1 - 6, wobei zum Herstellen des ersten Formteils (60) ein erster Kunststoff (8) hinter eine erste Struktur (50) aus einem flexiblen Material gespritzt oder gepresst wird, dass die Struktur (50) mit dem ersten Kunststoff (8) verbunden wird und eine Oberfläche des ersten Formteils (60) bildet.

8. Verfahren nach Anspruch 7, wobei die jeweilige Erhebung (47') auf einer von der ersten Struktur (50) abgewandten Seite des ersten Formteils ausgebildet wird.

9. Verfahren nach einem der Ansprüche 7 oder 8, wobei die erste Struktur (50) aus Textilien und/oder einem Gewebe und/oder einem Geflecht und/oder einer Folie und/oder einem Teppichstoff und/oder einem Dekormaterial gebildet ist.

10. Verfahren nach einem der Ansprüche 1 - 9, wobei ein Teilstück (60.1) des ersten Formteils (60) ausgestanzt, ausgeschnitten oder auf eine andere Weise entfernt wird und das zweite Formteil (80) vor dem Aufbringen der Schicht (75') an Stelle des entfernten Teilstücks (60.1) an dem ersten Formteil (60) angeordnet wird.

11. Verfahren nach einem der Ansprüche 1 - 10, wobei das erste Formteil (10, 60) und das zweite Formteil (15, 80) nebeneinander liegende Bereiche einer Oberfläche des Verbundteils (30, 90) bilden.

## Claims

1. A method for producing a composite part (90) from a first moulded part (60) and a second moulded part (80) by means of injection moulding or injection compression moulding or back compression moulding of plastic material (21) with the following steps:
(a) production of the first moulded part (60) from a first plastic by means of injection moulding or injection compression moulding or back compression moulding of the first plastic (8) such that the first moulded part (60) comprises at least one elevation (47') on one side,
(b) arrangement of the second moulded part (80) against the first moulded part (60) such that the respective elevation (47') is located at an edge (81) of the second moulded part (80), wherein the second moulded part (80) is a structure of a flexible material and is formed from textiles and/or a woven fabric and/or a braiding and/or a foil and/or a carpet fabric, and
(c) application of a layer (75') of a second plastic (21) on the second moulded part (80) on a side facing away from the first moulded part (60) by means of injection moulding or injection compression moulding or back compression moulding of the second plastic (21), in such a way that both a surface of the elevation (47') and the second moulded part (80) are at least partially covered by the layer (75') and the first plastic (8) and a second plastic (21) form a bond which holds the two moulded parts (60, 80) together in the region of the elevation (47').

2. The method according to claim 1, wherein the layer (20', 75') is applied at a temperature at which the first plastic (8) is softened or liquefied at least in a partial region of the elevation (11', 47').

3. The method according to any one of claims 1-2, wherein the elevation (11', 47') comprises at least one undercut and the layer (20', 75') is bonded to the elevation (11', 47') in the region of the undercut.

4. The method according to any one of claims 1-3, wherein the respective elevation (11', 47') has dimensions such that it protrudes over the second moulded part (15, 80) at the respective edge (16, 81).

5. The method according to any one of claims 1-4, wherein the elevation (11', 47') is constituted as a pin or column or cylinder or cone or rib.

6. The method according to any one of claims 1-5, wherein the second moulded part (15, 80) comprises at least one hole (16, 81) or a cutout and the hole (16, 81) or the cutout forms the respective edge, wherein the second moulded part (15, 80) is arranged in such a way that the elevation (11', 47') protrudes into the hole (16, 81) or the cutout or penetrates the hole or the cutout.

7. The method according to any one of claims 1-6, wherein the first moulded part (60) is produced by injecting or pressing a first plastic (8) behind a first structure (50) of a flexible material such that the structure (50) is bonded to the first plastic (8) and forms a surface of the first moulded part (60).

8. The method according to claim 7, wherein the respective elevation (47') is formed on a side of the first moulded part that faces away from the first structure (50).

9. The method according any one of claims 7 or 8, wherein the first structure (50) is formed from textiles and/or a woven fabric and/or a braiding and/or a foil and/or a carpet fabric and/or a decorative material.

10. The method according to any one of claims 1-9, wherein a segment (60.1) of the first moulded part (16) is punched out, cut out or otherwise removed and the second moulded part (80) is arranged, before the application of the layer (75'), on the first moulded part (60) instead of the segment (60.1)

11. The method according to any one of claims 1-10, wherein the first moulded part (10, 60) and the second moulded part (15, 80) form adjacent regions of a surface of the composite (30, 90).

## Revendications

1. Procédé de fabrication d'une pièce composite (90) à partir d'une première pièce moulée (60) et d'une deuxième pièce moulée (80) par moulage par injection ou par moulage par estampage ou par surmoulage par compression de matière plastique (21) avec les étapes suivantes :
(a) fabrication de la première pièce moulée (60) à partir d'une première matière plastique (8), par moulage par injection ou par moulage par estampage ou par surmoulage par compression de la première matière plastique (8), de sorte que la première pièce moulée (60) comporte sur un côté au moins une élévation (47'),
(b) disposition de la deuxième pièce moulée (80) sur la première pièce moulée (60), de sorte que l'élévation (47') concernée se trouve sur un bord (81) de la deuxième pièce moulée (80), la deuxième pièce moulée (80) étant une structure dans une matière flexible et étant formée de textiles et/ou d'un tissu et/ou d'un tissage et/ou d'un film et/ou d'une étoffe à tapis et
(c) application d'une couche (75') en une deuxième matière plastique (21) sur la deuxième pièce moulée (80) sur un côté opposé à la première pièce moulée (60) par moulage par injection ou par moulage par estampage ou par surmoulage par compression de la deuxième matière plastique (21), de sorte qu'aussi bien une surface de l'élévation (47') que la deuxième pièce moulée (80) soient recouvertes en partie par la couche (75') et qu'entre la première matière plastique (8) et la deuxième matière plastique (21), il intervienne dans la zone de l'élévation (47') une liaison assurant la cohésion des deux pièces moulées (60, 80).

2. Procédé selon la revendication 1, la couche (20', 75') étant appliquée à une température, à laquelle la première matière plastique (8) se ramollit ou se liquéfie au moins dans une zone partielle de l'élévation (11', 47').

3. Procédé selon l'une quelconque des revendications 1-2, l'élévation (11', 47') comportant au moins une contre-dépouille et la couche (20', 75') avec l'élévation (11', 47') étant en liaison dans la zone de la contre-dépouille.

4. Procédé selon l'une quelconque des revendications 1-3, l'élévation (11', 47') concernée étant dimensionnée de sorte à saillir par dessus la deuxième pièce moulée (15, 80) sur le bord (16, 81) concerné.

5. Procédé selon l'une quelconque des revendications 1-4, l'élévation (11', 47') étant conçue sous la forme d'une cheville ou d'une colonne ou d'un cylindre ou d'un cône ou d'une nervure.

6. Procédé selon l'une quelconque des revendications 1-5, la deuxième pièce moulée (15, 80) comportant au moins un trou (16, 81) ou un évidement et le trou (16, 81) ou l'évidement formant le bord concerné, alors qu'on dispose la deuxième pièce moulée (15, 80) de sorte que l'élévation (11', 47') saillisse dans le trou (16, 81) ou dans l'évidement ou traverse le trou ou l'évidement.

7. Procédé selon l'une quelconque des revendications 1-6, pour la fabrication de la première pièce moulée (60), une première matière plastique (8) étant injectée ou comprimée derrière une première structure (50) en une matière flexible, de sorte que la structure (50) soit reliée avec la première matière plastique (8) et forme une surface de la première pièce moulée (60).

8. Procédé selon la revendication 7, l'élévation (47') concernée étant réalisée sur un côté de la première pièce moulée qui est opposé à la première structure (50).

9. Procédé selon l'une quelconque des revendications 7 ou 8, la première structure (50) étant formée en textiles et/ou en un tissu et/ou en un tissage et/ou en un film et/ou en une étoffe à tapis et/ou en une matière décorative.

10. Procédé selon l'une quelconque des revendications 1-9, une parcelle (60.1) de la première pièce moulée (60) étant découpée à la matrice, découpée ou retirée d'une autre manière et la deuxième pièce moulée (80) étant disposée à la place de la parcelle retirée (60.1) sur la première pièce moulée (60), avant l'application de la couche (75').

11. Procédé selon l'une quelconque des revendications 1-10, la première pièce moulée (10, 60) et la deuxième pièce moulée (15, 80) formant des zones situées côte à côte d'une surface de la pièce composite (30, 90).
